# EUROPÄISCHE PATENTSCHRIFT

(11) **EP 1 854 747 B1**
(45) Veröffentlichungstag und Bekanntmachung des Hinweises auf die Patenterteilung: **09.01.2013**
(21) Anmeldenummer: 07007964.5
(22) Anmeldetag: 19.04.2007
(51) Int. Cl.: B65G 15/52, A01K 5/00

(54) **Viehfütterungswagen**
Cattle feeding truck
Bétaillère

(30) Priorität: 10.05.2006 DE 102006022011
(43) Veröffentlichungstag der Anmeldung: 14.11.2007
(73) Patentinhaber: Artemis Kautschuk- und Kunststoff-Technik GmbH, 30559 Hannover (DE)
(72) Erfinder: Mulder, Jan Harm, 7751 DN Dalen (NL)
(74) Vertreter: Seewald, Jürgen

(56) Entgegenhaltungen:
- EP-A- 0 212 146
- EP-A1- 1 021 949
- DE-U1- 9 312 943
- US-A- 3 015 381
- US-A- 4 589 543

## Beschreibung

Die vorliegende Erfindung betrifft einen Viehfütterungswagen gemäß dem Oberbegriff des Anspruchs 1.

Derartige Viehfütterungswagen sind beispielsweise aus EP 1 021 949 B1, EP 0 624 311 B1, EP 0 670 107 B1, EP0032776B1 und EP 0 003 813 A1 bekannt.

Viehfütterungswagen sind entweder selbstfahrend oder so ausgestattet, dass sie mit einem Zugfahrzeug, z. B. einem Traktor, gekoppelt werden können. Sie besitzen einen Vorratsbehälter, in den das Futter von oben eingegeben und dort meistens von einem oder mehreren senkrecht stehenden Rotoren gebrauchsfertig gemischt wird. Als Futter werden beispielsweise Silage, Kraftfutter, Getreide, Schrot und Getreideprodukte, Gras, Heu, und ggf. auch flüssige Produkte eingesetzt. Das Beschicken des Vorratsbehälters mit Futter erfolgt entweder durch ein Förderband, welches das Futter über den Vorratsbehälter fördert, von wo aus es unter Schwerkraft in diesen hineinfällt oder aber durch schaufelartige Selbstladevorrichtungen oder Fremdladevorrichtungen. Nach der Aufbereitung des Futters in dem Vorratsbehälter wird das es über seitliche Öffnungen im Vorratsbehälter auf ein oder mehrere Förderbänder aufgegeben, die das Futter z. B. in einen Futtertrog fördern, der längs einer Füttergasse angeordnet ist, welche der Viehfütterungswagen abfährt.

Die bisher in Viehfütterungswagen eingesetzten Förderbänder werden über Reibschluss mit meistens einer Antriebsrolle angetrieben. Aufgrund der Konsistenz des Futters kommt es schon nach sehr kurzer Betriebszeit zu einem Anhaften des Futters an den Reibschlussflächen, so dass das Förderband aus der Spur kommt, in dem es seitlich abdriftet. Dadurch kommt es zu einem sehr schnellen Verschleiß vor allem der Seitenbereiche der Förderbänder, insbesondere wenn diese aus einem PVC-Material gefertigt sind.

Aufgabe der Erfindung ist es, hier Abhilfe zu schaffen, und ein Förderband für Viehfütterungswagen zur Verfügung zu stellen, welches eine lange Lebensdauer bei sehr guter Förderleistung aufweist.

Diese Aufgabe wird erfindungsgemäß mit einem Viehfütterungswagen gelöst, der die Merkmale des Anspruchs 1 aufweist.

Bei dem mindestens einen Förderband eines erfindungsgemäßen Viehfütterungswagen bilden die Nockenriemen einen robusten seitlichen Abschluss des Förderbandes, der schon allein einem vorzeitigen Verschleiß des Förderbandes entgegenwirkt. Des weiteren ist ein starkes Spannen des Förderbandes, wie es zur Erzielung eines Reibschlusses zwischen dem Förderband und der Antriebsrolle erforderlich ist, wegen des formschlüssigen Zwangsantriebes zwischen dem Nockenriemen und den Fingerrädern nicht nötig. Wesentlich ist auch, dass aufgrund des Zwangsantriebs des Förderbandes nur im relativ schmalen Bereich der Nockenriemen Verschmutzungen durch das Futter für einen ordnungsgemäßen Betrieb unerheblich sind. Weiterhin gestattet der modulare Aufbau des Förderbandes ein leichtes Auswechseln von beschädigten Teilen, ohne gleich das gesamte Förderband austauschen zu müssen. Das eine Förderoberfläche bildende Flächengebilde kann einteilig oder aber aus Einzelteilen zusammengesetzt sein, wobei das Flächengebilde eine geschlossene oder perforierte Struktur haben kann.

In einer vorteilhaften Ausführungsform der Erfindung besteht das Flächengebilde aus einzelnen Tragplatten, die an den Tragstäben befestigt sind. Diese Ausbildung erhöht die Modularität des Förderbandes.

In einer vorteilhaften Ausführungsform der Erfindung stoßen die Tragplatten aneinander und überlappen sich an den Stoßstellen, wobei die Stoßstellen als male-female-Rastverbindungen ausgebildet sind. Dadurch wird eine dichte Transportfläche geschaffen und ein Auseinanderklaffen der Tragplatten insbesondere an den Umlenkstellen verhindert.

In vorteilhafter Weiterbildung der Erfindung sind die Nocken, durch dünne Stege voneinander getrennt, in gleicher Teilung (T) voneinander beabstandet, wobei die Nocken nach oben über die Stege überstehen und die Tragstäbe mit abgeplatteten Enden in den dadurch gebildeten Zwischenräumen von oben auf den Stegen aufliegen und an diesen befestigt sind. Aufgrund dieser Ausbildung sind die Tragplatten seitlich geführt und geschützt. Des Weiteren ergeben sich günstige, vorbestimmte Befestigungsstellen für die Tragstäbe.

Ein weiterer Vorteil der vorliegenden Erfindung ist bei einer Ausführung zu sehen, bei der die Nockenriemen eine endliche Länge aufweisen und durch ein Schloss endlos machbar sind. Dadurch kann das Förderband nach dem Lösen der Schlösser der beiden Nockenriemen problemlos von den beiden Umlenkstellen abgezogen bzw. auf diese aufgezogen werden kann, was die Montage bzw. Demontage des Förderbandes im Viehfütterungswagen wesentlich erleichtert.

Weitere vorteilhafte Ausgestaltungen der Erfindung ergeben sich aus den übrigen Unteransprüchen.

Die Erfindung wird nachstehend anhand eines Ausführungsbeispiels näher erläutert. In der dazugehörigen Zeichnung zeigen:
- Fig. 1.1 - 1.3: verschiedene, bekannte Konzepte von Viehfütterungswagen,
- Fig. 2: einen perspektivischen Blick auf ein komplettes Förderband eines erfindungsgemäßen Viehfütterungswagens,
- Fig. 3: einen Blick von schräg innen auf den Bereich eines Fingerrades des Förderbandes gemäß Fig. 2 bei weggelassenen Tragplatten,
- Fig. 4: eine Darstellung gemäß Fig. 2 in teilweise Explosionsdarstellung, und
- Fig. 5: einen vergrößerten Ausschnitt A gemäß Fig. 4.

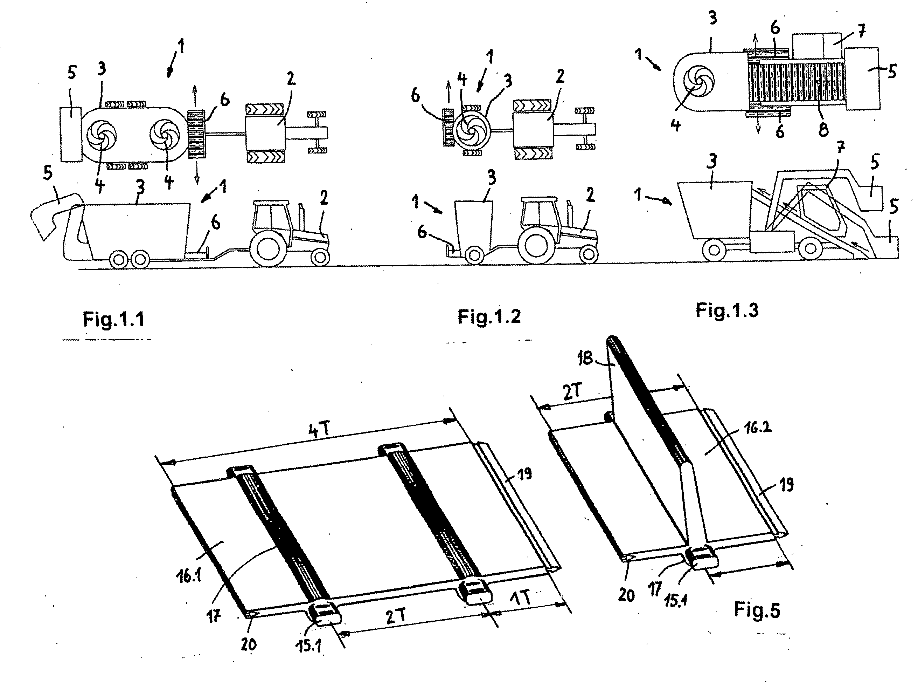

Die schematischen Darstellungen gemäß den Figuren 1.1 bis 1.3 zeigen verschiedene, bekannte Ausführungen für Viehfütterungswagen 1. In dem in Fig. 1.1 gezeigten Beispiel wird der Viehfütterungswagen 1 von einem Traktor 2 gezogen. Im Vorratsbehälter 3 des Viehfütterungswagens 1 sind zwei senkrecht stehende Rotoren 4 angeordnet, die das in den Vorratsbehälter 3 eingegebene Futter mischen und zerkleinern. Die Beladung des Viehfütterungswagens 1 erfolgt über einen schaufelartigen Selbstlader 5, der wie die Rotoren 4 über eine Motorwelle des Traktors 2 angetrieben wird. Die Rotoren 4 führen die fertige Futtermischung einem Förderband 6 zu, welches in beiden Richtungen quer zur Fahrtrichtung des Traktors 2 fördern kann. Zur Fütterung von Vieh fährt der Traktor 2 mit dem angehängten Fütterungswagen 4 durch eine sogenannte Füttergasse, wobei das Förderband 6 die erforderliche Futtermenge in einen längs der Füttergasse ausgerichteten Futtertrog fördert.

Das in Fig. 1.2 gezeigte Beispiel betrifft ebenfalls wieder einen durch einen Traktor 2 gezogenen Viehfütterungswagen 1, dessen Vorratsbehälter 3 aber wesentlich kleiner ist als der des Beispiels gemäß Fig. 1.1. In diesem Vorratsbehälter 3 ist ein Rotor 4 angeordnet, der das dem Vorratsbehälter 3 von oben durch einen nicht dargestellten Fremdlader zugeführte Futter mischt und einem Förderband 6 zuführt, welches die fertige Futtermischung, wie im vorhergehenden Beispiel erläutert, zu einer Futterstelle fördert.

Das Beispiel gemäß Fig.1.3 betrifft einen selbstfahrenden Viehfütterungswagen 1 mit einem Fahrerhaus 7 und einen schaufelartigen Selbstlader 5, der in der Seitenansicht in zwei verschiedenen Handlingpositionen dargestellt ist. Die obere Position zeigt den Selbstlader 5 beim Abschneiden von z. B. Silage aus einem Silagesilo, wozu der schaufelartige Selbstlader 5 eine entsprechende Schneidkante aufweist. Nach dem Abschneiden der Silage durch den Selbstlader 5 wird dieser in eine abgesenkte untere Position überführt, in der er die Silage an ein Förderband 8 übergibt, welches die Silage von oben dem Vorratsbehälter 3 des Viehfütterungswagens 1 zuführt. Dort wird die Silage, ggf. mit anderen zugegebenen Futtermitteln durch einen Rotor 4 gemischt und seitlichen Förderbändern 6 zugeführt, die die fertige Futtermischung in die Futtertröge fördern.

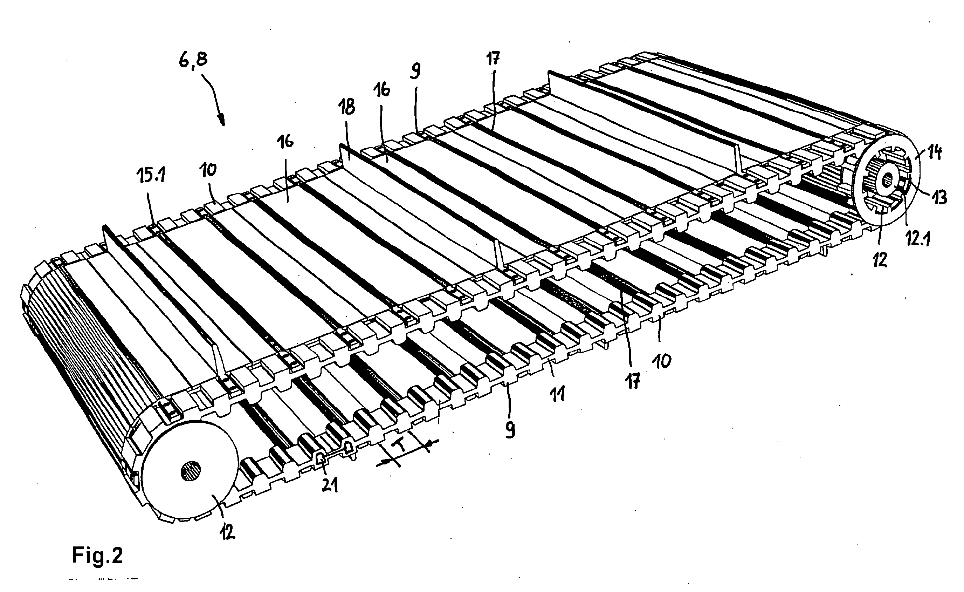

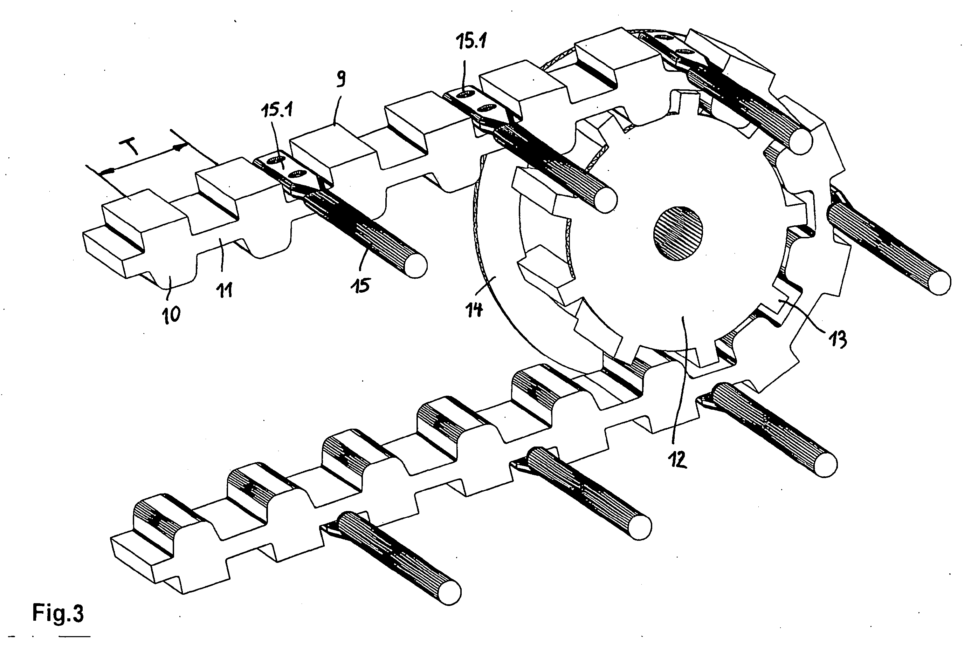

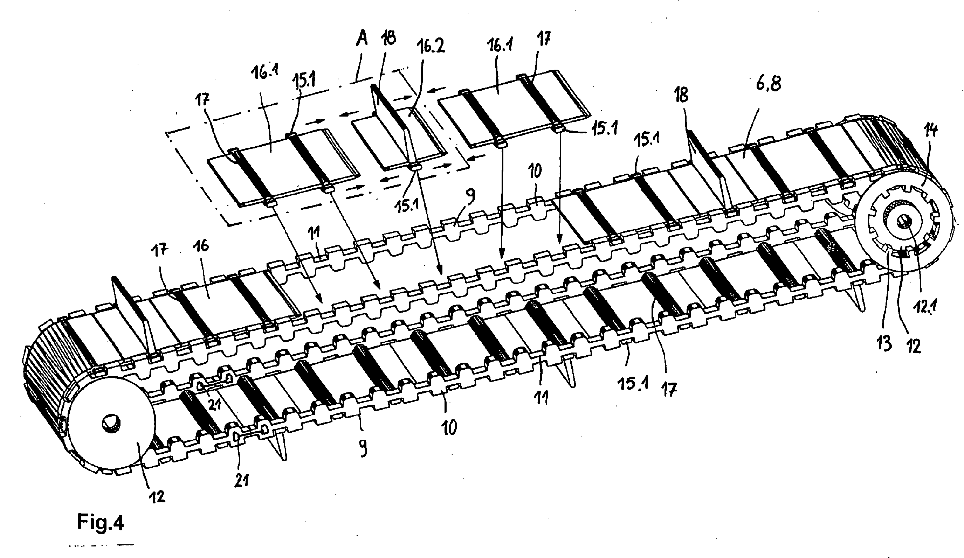

Der Aufbau des anhand der Figuren 1.1-1.3 prinzipiell beschriebenen Förderbandes 6 bzw. 8 wird nachstehend anhand der Fig. 2-5 näher erläutert.

Das Förderband 6, 8 besitzt robuste Seitenränder in Form von Nockenriemen 9. Diese sind aus Gummi gefertigt und besitzen zur Verstärkung Gewebeeinlagen auf Textilbasis, die in der Zeichnung nicht dargestellt sind. Jeder Nockenriemen 9 setzt sich einstückig aus Nocken 10 zusammen, die durch dünne Stege voneinander getrennt und auf der Länge des Förderbandes 6, 8 mit gleicher Teilung T angeordnet sind. Die dünnen und damit biegsamen Stege 11 gewährleisten einen problemlosen Umlauf der Nockenriemen 9 um Fingerräder 12, die einen relativ geringen Durchmesser haben. Vom Grundkörper der Fingerräder 12 ragen Finger 13 radial ab, deren Abstand und Länge so gewählt ist, dass die Nocken 10 der Nockenriemen 9 beim Auflaufen auf die Fingerräder 12 formschlüssig in die Zwischenräume zwischen den Fingern 13 eingreifen können. Um dieses Eingreifen zu begünstigen, sind die unteren Kanten der Nocken 10 abgerundet. Ein seitliches Herauswandern der Nockenriemen 10 aus den Fingerrädern 12 wird dadurch verhindert, dass letztere einstückig mit einer jeweils auf ihrer Außenseite angeordneten Bordscheibe 14 ausgestattet sind.

Die Nockenriemen 9 beider Bandseiten sind durch Tragstäbe 15 miteinander verbunden. Dabei handelt es sich um Metallstäbe mit rundem Querschnitt, die an ihren Enden Abflachungen 15.1 aufweisen. Mit diesen Abflachungen 15.1 sind die Tragstäbe 15 von oben auf die Stege 11 aufgelegt, wobei jeweils immer ein Steg 11 freigelassen wird, die Tragstäbe 15 also in doppelter Teilung 2T voneinander angeordnet sind. Die Verbindung der Tragstäbe 15 mit den Nockenriemen 9 erfolgt an den Auflagestellen durch Vernietung.

Um eine geschlossene Transportoberfläche des Förderbandes 6, 8 zu schaffen, nehmen die Tragstäbe 15 Tragplatten 16 auf. Diese sind ebenfalls aus Gummi, ggf. mit Verstärkungseinlagen, gefertigt, wobei sie zum Aufschieben auf die Tragstäbe 15 schlauchartige Hülsen 17 aufweisen, die einstückig mit den Tragplatten 16 ausgeführt sind. Die Tragstäbe 15 werden vor ihrem Vernieten mit den Nockenriemen 9 durch diese Hülsen17 hindurchgesteckt, wobei dann ihre Abflachungen 15.1 seitlich aus den Tragplatten 16 hervorragen. Die Breite der Tragplatten 16 ist so gewählt, dass sie den Zwischenraum zwischen den beidseitig vorgesehenen Nockenriemen 9 im wesentlichen ausfüllen.

In der beschriebenen Ausführungsform der Erfindung kommen zwei unterschiedliche Tragplatten 16 zum Einsatz, nämlich Tragplatten 16.1 und 16.2. Die Tragplatten 16.1 sind bei gleicher Breite doppelt so lang wie die Tragplatten 16.2. Dementsprechend weisen die längeren Tragplatten 16.1 zwei Hülsen 17 für Tragstäbe 15 auf, die im Abstand der an den Nockenriemen 9 befestigten Tragstäbe 15, also in doppelter Teilung 2T angeordnet sind. Die Tragplatten 16.1 sind über die Hülsen 17 hinaus jeweils um eine Teilungslänge T verlängert. Sie haben damit eine Gesamtlänge von vier Teilungen 4T. Die kürzeren Tragplatten 16.2 haben eine Länge von zwei Teilungen 2T, wobei sie in Querrichtung gesehen mittig eine Hülse 17 für einen Tragstab 15 aufweisen. Oberhalb der Hülse 17 für den Tragstab 15 ist einstückig mit der Tragplatte 16.2 eine Leiste 18 ausgebildet. Sie nimmt bei in Betrieb befindlichem Förderband 6, 8 das aufliegende Futter mit, so dass ein kontinuierlicher Transport des Futters gewährleistet ist. Die beschriebene Ausbildung der Tragplatten 16.1 und 16.2 gestattet es, die Anzahl der Leisten 18 problemlos zu variieren. Außerdem muß aufgrund des modularen Aufbaus des Förderbandes 6, 8 bei Beschädigungen nicht das gesamte Band 6, 8 ausgewechselt werden, sondern nur die beschädigten Teile.

Im montierten Zustand stoßen die Tragplatten 16 nicht stumpf aneinander, sondern es sind Überlappungsbereiche in Form von female-male- Rastverbindungen 19 bzw. 20 vorgesehen, die ein Auseinanderklaffen der Tragplatten 16, insbesondere im Umlenkbereich der Fingerräder 12 vermeiden sollen. Diese Überlappungsverbindung geht insbesondere aus der vergrößerten Darstellung gemäß Fig. 5 hervor. Aus dieser Darstellung ist ebenfalls ersichtlich, dass sich die Länge der male-Verbindungsteile 19 zu der Länge 4T der Tragplatten 16.1 bzw. 2T der Tragplatten 16.2 addiert, wodurch jedoch die wirksame Länge 4T bzw. 2T der Platten 16.1 bzw. 16.2 nicht vergrößert wird, da die male-Verbindungsteile 19 vollständig in den female-Verbindungsteilen 20 der benachbarten Tragplatten 16 aufgenommen werden.

Das Förderband 6, 8 besitzt zwei Umlenkstellen, die jeweils durch ein paar Fingerräder 12 gebildet sind. Die Fingerräder 12 eines Paares sitzen auf einer aus der Zeichnung nicht ersichtlichen Welle, die drehfest in einer Nabe 12.1 der Fingerräder 12 gelagert ist. Dabei ist eine der Wellen eines Fingerradpaares angetrieben, während das andere Fingerradpaar, angetrieben durch die Nockenriemen 9, nur mitläuft.

Zur Montage wird ein Förderband 6.8 entsprechender Länge im Viehfütterungswagen 1 auf die Fingerradpaare aufgefädelt und dann durch Schließen von auf der Innen- und Außenseite eines Nockenpaares vorgesehenen Schlössern 21 endlos gemacht. In der Zeichnung sind die Schlösser 21 nur symbolisch dargestellt. Die Montage und Demontage eines Förderbandes 6, 8 gestaltet sich aufgrund dieser Ausbildung sehr einfach.

## Patentansprüche

1. Viehfütterungswagen mit einem Vorratsbehälter für das Futter und mindestens einem Förderband zum Fördern des Futters in den bzw. aus dem Vorratsbehälter, **dadurch gekennzeichnet, dass** das Förderband (6, 8) zusammengesetzt ist aus:
- je einem auf beiden Längsseiten angeordneten Nockenriemen (9) mit auf dessen Unterseite angeordneten Nocken (10)
- im Abstand parallel zueinander angeordneten, die beiden Nockenriemen (9) verbindenden Tragstäben (15)
- einem Flächengebilde, welches die Tragstäbe (15) zur Schaffung einer Förderoberfläche abdeckt, und
wobei die Nocken (10) zum Antrieb des Förderbandes (6, 8) formschlüssig in mindestens ein angetriebenes Fingerrad (12) eingreifen.

2. Viehfütterungswagen nach Anspruch 1, **dadurch gekennzeichnet, dass** das Flächengebilde aus einzelnen Tragplatten (16) besteht, die an den Tragstäben (15) befestigt sind.

3. Viehfütterungswagen nach Anspruch 2, **dadurch gekennzeichnet, dass** die Tragplatten (16) schlauchartige, einstückig mit ihnen ausgebildete Hülsen (17) aufweisen, mit denen sie auf die Tragstäbe (15) aufgeschoben sind.

4. Viehfütterungswagen nach Anspruch 2 oder 3, **dadurch gekennzeichnet, dass** die Tragplatten (16) aneinander stoßen und sich an den Stoßstellen überlappen.

5. Viehfütterungswagen nach Anspruch 4, **dadurch gekennzeichnet, dass** die Stoßstellen als male-female-Rastverbindungen (19, 20) ausgebildet sind.

6. Viehfütterungswagen nach einem der vorstehenden Ansprüche 2 bis 5, **dadurch gekennzeichnet, dass** einzelne Tragplatten (16.2) eine einstückig angeformte Mitnehmerleiste (18) aufweisen.

7. Viehfütterungswagen nach einem der vorstehenden Ansprüche, da durch gekennzeichnet, dass die Nockenriemen (9) eine endliche Länge aufweisen und durch ein Schloss (21) endlos machbar sind.

8. Viehfütterungswagen nach einem der vorstehenden Ansprüche, **dadurch gekennzeichnet, dass** die Nockenriemen (9) und die Tragplatten (16) aus einem polymeren Werkstoff, insbesondere aus Gummi bestehen.

9. Viehfütterungswagen nach einem der vorstehenden Ansprüche, **dadurch gekennzeichnet, dass** die Nocken (10) durch dünne Stege (11) getrennt, in gleicher Teilung (T) voneinander beabstandet sind, wobei die Nocken (10) nach oben über die Stege (11) überstehen und die Tragstäbe (15) mit abgeplatteten Enden (15.1) in den dadurch gebildeten Zwischenräumen von oben auf den Stegen (11) aufliegen und an diesen befestigt sind.

10. Viehfütterungswagen nach einem der vorstehenden Ansprüche, **dadurch gekennzeichnet, dass** die Nockenriemen (9) und ggf. auch die Tragplatten (16) Verstärkungseinlagen, insbesondere Gewebeeinlagen auf Textilbasis, aufweisen.

## Claims

1. Cattle fodder wagon with a storage container for the fodder and at least one conveyor belt for conveying the fodder into or out of said storage container,
**characterised in that**
the conveyor belt (6, 8) is composed of:
- one cam belt (9), in each case, which is arranged on the two longitudinal sides and has cams (10) arranged on its underside;
- carrier bars (15) which are arranged at a distance from, and parallel to, each other and which connect the two cam belts (9);
- a planar structure which covers the carrier bars (15) for the purpose of providing a conveying surface, and
wherein the cams (10) engage, for the purpose of driving the conveyor belt (6, 8), in at least one driven finger wheel (12) in a form-locking manner.

2. Cattle fodder wagon according to claim 1,
**characterised in that**
the planar structure consists of individual carrier plates (16) which are fastened to the carrier bars (15).

3. Cattle fodder wagon according to claim 2,
**characterised in that**
the carrier plates (16) have hose-like sleeves (17) which are constructed in one piece with them and by means of which they are pushed onto the carrier bars (15).

4. Cattle fodder wagon according to claim 2 or 3,
**characterised in that**
the carrier plates (16) abut against one another and overlap at the points of abutment.

5. Cattle fodder wagon according to claim 4,
**characterised in that**
the points of abutment are constructed as male/female latching connections (19, 20).

6. Cattle fodder wagon according to one of the preceding claims 2 to 5,
**characterised in that**
individual carrier plates (16.2) have an entraining strip (18) which is formed on in one piece.

7. Cattle fodder wagon according to one of the preceding claims,
**characterised in that**
the cam belts (9) have a finite length and can be made endless by means of a connecting link (21).

8. Cattle fodder wagon according to one of the preceding claims,
**characterised in that**
the cam belts (9) and the carrier plates (16) consist of a polymeric material, in particular rubber.

9. Cattle fodder wagon according to one of the preceding claims,
**characterised in that**
the cams (10) are spaced apart from one another at the same pitch (T) in a manner separated by thin webs (11), the cams (10) projecting upwards above the webs (11) and the carrier bars (15) resting on the webs (11) from above, via flattened ends (15.1), in the intervening spaces formed thereby, and being fastened to said webs.

10. Cattle fodder wagon according to one of the preceding claims,
**characterised in that**
the cam belts (9) and, optionally, also the carrier plates (16) have reinforcing inserts, in particular textile-based fabric inserts.

## Revendications

1. Remorque d'affouragement du bétail avec un réservoir de fourrage et au moins une bande transporteuse servant à transporter le fourrage dans ou hors du réservoir, **caractérisé en ce que** la bande transporteuse (6, 8) est composée:
- d'une courroie munie d'ergots (9) disposée respectivement sur chacun des deux côtés longitudinaux, les ergots (10) étant disposés sur la face inférieure de la courroie,
- des barres porteuses (15) qui sont disposées parallèlement avec un écart l'une par rapport à l'autre et relient les deux courroies munies d'ergots (9),
- un matériau en feuille qui recouvre les barres porteuses (15) pour créer une surface de transport, et
**en ce que**, pour l'entraînement de la bande transporteuse (6, 8), les ergots (10) prennent, de façon à créer une liaison mécanique, dans au moins une roue à doigts (12) entraînée.

2. Remorque d'affouragement du bétail suivant la revendication 1, **caractérisée en ce que** le matériau en feuille est constitué différentes plaques porteuses (16) qui sont fixées aux barres porteuses (15).

3. Remorque d'affouragement du bétail suivant la revendication 2, **caractérisée en ce que** les plaques porteuses (16) présentent des fourreaux en forme de tuyau (17) conçus de manière à ne former qu'une seule pièce avec elles et au moyen desquels elles peuvent être coulissées sur les barres porteuses (15).

4. Remorque d'affouragement du bétail suivant la revendication 2 ou 3, **caractérisée en ce que** les plaques porteuses (16) sont adjacentes l'une à l'autre et se chevauchent au niveau des zones d'aboutement.

5. Remorque d'affouragement du bétail suivant la revendication 4, **caractérisée en ce que** les zones d'aboutement sont réalisées comme liaison par enclenchement mâle/femelle (19, 20).

6. Remorque d'affouragement du bétail suivant une des revendications précédentes 2 à 5, **caractérisée en ce que** différentes plaques porteuses (16.2) présentent un liteau entraîneur rapporté par formage.

7. Remorque d'affouragement du bétail suivant une des revendications précédentes, **caractérisée en ce que** les courroies munies d'ergots (9) présentent une longueur finie et peuvent être rendues sans fin au moyen d'un élément de verrouillage (21).

8. Remorque d'affouragement du bétail suivant une des revendications précédentes, **caractérisée en ce que** les courroies munies d'ergots (9) et les plaques porteuses (16) sont en un matériau polymère, en particulier en caoutchouc.

9. Remorque d'affouragement du bétail suivant une des revendications précédentes, **caractérisée en ce que** les ergots (10), séparés par de minces ponts (11), sont espacés l'un de l'autre d'un pas identique (T), les ergots (10) faisant saillie vers le haut, au-delà des ponts (11) et **en ce qu'**avec leurs extrémités aplaties, les barres porteuses (15) reposent et sont fixées sur les ponts depuis le haut, dans les espaces intermédiaires ainsi créés.

10. Remorque d'affouragement du bétail suivant une des revendications précédentes, **caractérisée en ce que** les courroies munies d'ergots (9) et, le cas échéant, les plaques porteuses (16) présentent des inserts de renforcement, en particulier des inserts de toile à base textile.
